# EUROPÄISCHE PATENTSCHRIFT

(11) **EP 1 481 893 B1**
(45) Veröffentlichungstag und Bekanntmachung des Hinweises auf die Patenterteilung: **21.03.2007**
(21) Anmeldenummer: 04012590.8
(22) Anmeldetag: 27.05.2004
(51) Int. Cl.: B64D 9/00, B60P 7/08

(54) **Zurrvorrichtung für ein Frachtladesystem eines Transportmittels, insbesondere eines Flugzeuges**
Cargo tie-down system
Système d'arrimage pour fret

(30) Priorität: 30.05.2003 DE 10324650
(43) Veröffentlichungstag der Anmeldung: 01.12.2004
(73) Patentinhaber: Airbus Deutschland GmbH, 21129 Hamburg (DE)
(72) Erfinder: Bruns, Johannes, Dipl.-Ing., 26169 Gehlenberg (DE)
(74) Vertreter: Klöpper, Ute

(56) Entgegenhaltungen:
- EP-A- 0 894 713
- US-A- 3 888 190
- US-A- 4 741 653
- US-A1- 2002 168 242

## Beschreibung

Die Erfindung betrifft eine Zurrvorrichtung für ein Frachtladesystem eines Transportmittels, insbesondere eines Flugzeuges, welches ein Zurrelement zum Verzurren von Lasten oder Gütern umfasst.

Transportmittel wie Flugzeuge werden sowohl zum Befördern von Fracht als auch zum Befördern von Passagieren verwendet. Ein und dieselbe Maschine kann zum Beispiel tags zur Passagier- und nachts zur Frachtbeförderung genutzt werden. Neben dem Transfer und der Verriegelung bzw. Verzurrung von Frachtgütern muss in einem solchen Fall das Frachtladesystem die Montage von Sitzen für die Passagierbeförderung ermöglichen. Die Frachtladesysteme müssen daher flexibel und schnell umrüstbar sein.

Die zu transportierenden Frachtgüter können sehr vielfältig ausgebildet sein. Es werden genormte Container und Paletten sowie ungenormte Güter wie beispielsweise auf Spanplatten verzurrte Säcke oder Fahrzeuge transportiert. Die vergleichsweise hohen Lasten der Frachtgüter stellen sehr hohe Anforderungen bezüglich der Statik und Struktur an den Fußbodenaufbau und an die erforderlichen Lastenzurrpunkte. Weiterhin können bei speziellen Missionen spezielle Zusatzsysteme, wie medizinische Versorgungseinheiten auf dem Frachtraumboden befestigt werden. Insbesondere im Ernstfall und auch unter extremen Umweltbedingungen müssen die verschiedenen Einsatzmöglichkeiten in einer extrem kurzen Umrüstzeit durch ein Minimum von Bedienpersonal realisiert werden können.

Bekannte Systeme verwenden für den Passagiertransport Paletten mit darauf montierten Passagiersitzen, wobei die Paletten auf dem Frachtdeck befestigt werden können. Soll das Flugzeug zur Frachtbeförderung eingesetzt werden, werden die Paletten entfernt und die auf dem Frachtdeck vorgesehenen üblichen Funktionseinheiten, wie Zurrpunkte, Rolleneinheiten, Riegelelemente und Führungsschienen sind freigegeben, so dass Paletten oder Container mit Fracht anstelle der Sitzpaletten befestigt werden können.

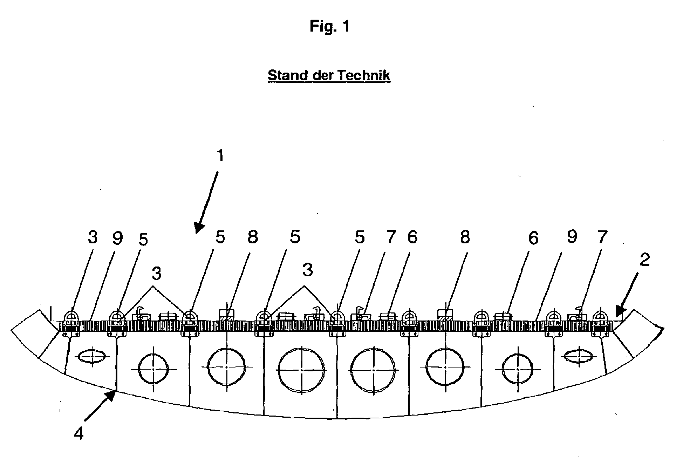

Sitze und weitere Systeme können auch alternativ direkt auf dem Frachtdeck montiert werden. Hierfür sind jedoch zusätzliche Befestigungsmöglichkeiten erforderlich. Üblicherweise werden als Montageschnittstellen dienende Befestigungsschienen oder Zurrpunkte so vorgesehen, dass entweder Passagiersitze oder die genannten Funktionselemente des Frachtladesystems auf dem Frachtraumboden befestigt werden können. Eine Anordnung von derartigen Funktionselementen auf dem Frachtraumboden ist in Fig. 1 der Zeichnung ersichtlich. Zurrpunkte sind vorgesehen zur Verzurrung von Lasten mittels eines Zurrringes. Die Zurrpunkte werden zahlreich und meistens in gleichen Abständen im Frachtraum verteilt. Der Zurrpunkt wird meistens direkt an der Flugzeugstruktur angebunden, um große Kräfte und Momente in alle Richtungen aufnehmen zu können. Falls die Zurrpunkte eines Frachtladesystems zusätzlich für die Montage von weiteren Komponenten oder System genutzt werden sollen, müssen sie ganz oder teilweise demontiert werden. Dieses ist zeitaufwändig in der Handhabung und kann zu einem Verlust der "losen" Zurrpunktteile führen.

Die EP 0 894 713 A1 zeigt eine Zurrvorrichtung, die neben dem Zurrring ein im Flugzeugbau übliches Sitzschienenprofil mit zwei Aufnahmeöffnungen aufweist. Mit dieser Aufnahme können Rollenbahnen eines Frachtladesystems über Sitzschienenbolzen befestigt werden. Die Sitzschienenbolzen werden in die Aufnahmen des Sitzschienenprofils eingeführt und durch Verschieben in Längsrichtung und evtl. zusätzlicher Arretierung im Sitzschienenprofil verriegelt. Wenn Frachtcontainer transportiert werden sollen, kann somit eine Umrüstung auf ein Rollenbahnsystem erfolgen. Die Befestigung und Aufnahme mittels Sitzschienenbolzen in einem Profil ist jedoch relativ schmutzanfällig. Zur sicheren Verriegelung ist es notwendig, dass im Profil keine Verunreinigungen abgelagert sind, die das Verschieben der Sitzschienenbolzen behindern könnten. Somit sind für das Umrüsten auf das Rollenbahrtsystem Verschmutzungen zu vermeiden oder aufwändige Reinigungsmaßnahmen wären durchzuführen.

Aus US-A-2002/0168242 ist eine Zurrvorrichtung für Seile gezeigt Jedoch auch hier sind keine Maßnahmen erkennbar, die für eine leichte Reinigung und Drainage der Vorrichtung geeignet sind.

Somit liegt der Erfindung die Aufgabe zugrunde eine Zurrvorrichtung derart auszubilden, dass ein Verriegeln /Verzurren von Frachtgütern universeller Art und dies mit einer einfachen und kostengünstigen Schnittstelle/ Interface ermöglicht wird. Die Umrüstzeit soll minimiert werden, wobei die Anfälligkeit gegen Verschmutzung und der Aufwand für Reinigungsmaßnahmen so gering wie möglich zu halten ist. Die Vorrichtung soll neben der Verzurrmöglichkeit Schnittstellen für eine einfache Installation weiterer Systeme wie beispielsweise Sitze, Rollenbahnen, medizinische Versorgungseinrichtungen (beispielsweise Krankenbarren) und weitere Funktionselemente bieten.

Diese Aufgabe wird erfindungsgemäß durch die im Patentanspruch 1 genannten Maßnahmen gelöst.

Dabei ist insbesondere vorteilhaft, dass mit der erfindungsgemäßen Zurrvorrichtung in einfacher, zuverlässiger und flexibler Weise ein Frachtladesystem entsprechend der Transportaufgabe schnell umgerüstet werden kann. Ein leichtes Reinigen und Entfernen von Verschmutzungen verringert den Aufwand für die Umrüstung. Die Vorrichtung ist multifunktional ausgebildet, was für Änderungen und Anpassungen an Kundenwünsche teure Neuentwicklungen überflüssig macht oder zumindest minimiert.Die Position des Zurrelementes kann mit einer leichten Handhabung verändert werden und ermöglicht bei Nichtgebrauch den Zugang zu einer Aufnahme, die flexibel als Befestigungspunkt für weitere Komponenten oder Systeme dient. Es ist eine Gewichtseinsparung erreicht, da die erfindungsgemäße Zurrvorrichtung neben einem Zurrelementanschluss auch andere Komponenten aufnehmen kann und hierfür keine zusätzlichen Bauteile notwendig sind.

Weiterbildungen und vorteilhafte Ausgestaltungen der Erfindung sind in den Ansprüchen 2 bis 8 angegeben. Weitere Einzelheiten und Vorteile ergeben sich aus der nachfolgenden Beschreibung von Ausführungsbeispielen der Erfindung.

In der Zeichnung ist die Erfindung anhand der Figuren 2 bis 6 näher dargestellt und nachfolgend beschrieben. In Fig. 1 ist eine üblicherweise bekannte Zurrvorrichtung dargestellt. In den Figuren sind gleiche Bauteile mit gleichen Bezugszeichen versehen.

Es zeigen im einzelnen:
- Fig. 1: einen Querschnitt eines Fußbodens im Frachtdeck eines Flugzeuges nach dem Stand der Technik,
- Fig. 2: eine erfindungsgemäße Zurrvorrichtung in einer Perspektivdarstellung,
- Fig.2A: der Grundkörper der Zurrvorrichtung in einer zweigeteilten Ausführung,
- Fig. 3: die Zurrvorrichtung in einer zweiten Ausführungsform in den Ansichten von vorn und von der Seite,
- Fig. 4: die Zurrvorrichtung in einer dritten Ausführungsform in einer Perspektivdarstellung,
- Fign. 5 und 6: Verwendungsmöglichkeiten der Zurrvorrichtung in einem Befestigungskanal.

In Fig. 1 ist ein nach dem Stand der Technik bekannter Fußboden 2 eines Flugzeugdecks 1 in einer Querschnittsdarstellung gezeigt. Bekannte Systeme verwenden für den Passagiertransport Paletten mit darauf (fest) montierten Passagiersitzen, welche auf dem Frachtdeck 1 befestigt werden können. Soll das Flugzeug zur Frachtbeförderung - wie in Fig. 1 dargestellt - eingesetzt werden, werden die Sitzpaletten entfernt und die auf dem Frachtdeck 1 vorgesehenen üblichen Funktionseinheiten, wie Zurrpunkte 3 mit Zurrringen 5, Rolleneinheiten 6, Riegelelemente 8 und Führungsschienen 7 werden freigegeben, so dass Paletten oder Container mit Fracht anstelle der Sitzpaletten befestigt werden können. Die Zurrpunkte 3 werden zahlreich und meist in gleichen Abständen über den gesamten Frachtraum verteilt. Sie sind meistens direkt an der Flugzeugstruktur 4 befestigt und können über Zurrringe 5 große statische Kräfte aufnehmen.

Sitze und weitere Systeme, wie beispielsweise medizinische Versorgungseinrichtungen (Krankenbarren) und zusätzliche Führungsschienen können alternativ direkt auf dem Frachtdeck montiert werden. Hierfür sind jedoch zusätzliche Befestigungsmöglichkeiten erforderlich oder die zur Aufnahme von großen Kräften vorgesehenen Zurrpunkte müssen umgerüstet werden, wie z.B. durch Entfernung der Zurrringe 5, was in der Handhabung sehr zeitaufwändig ist.

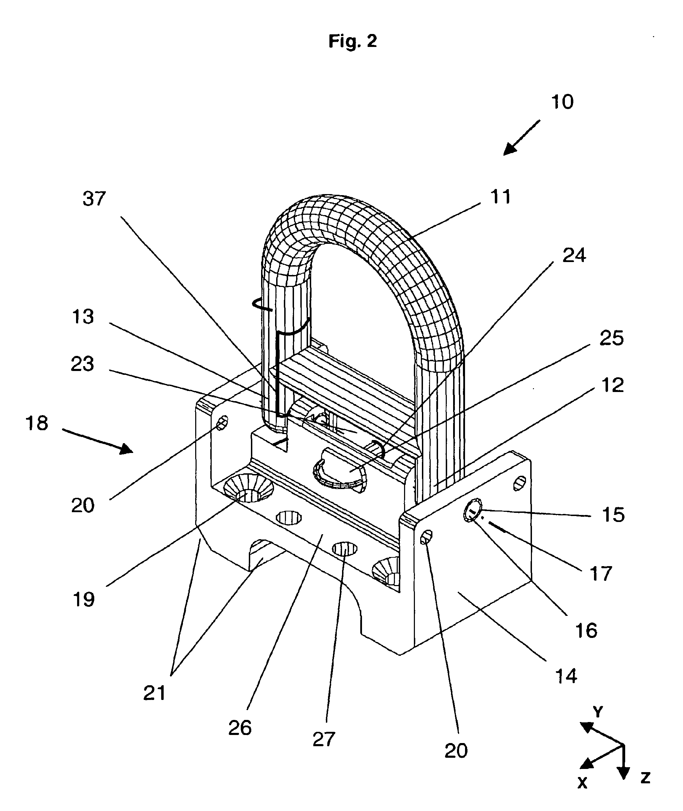

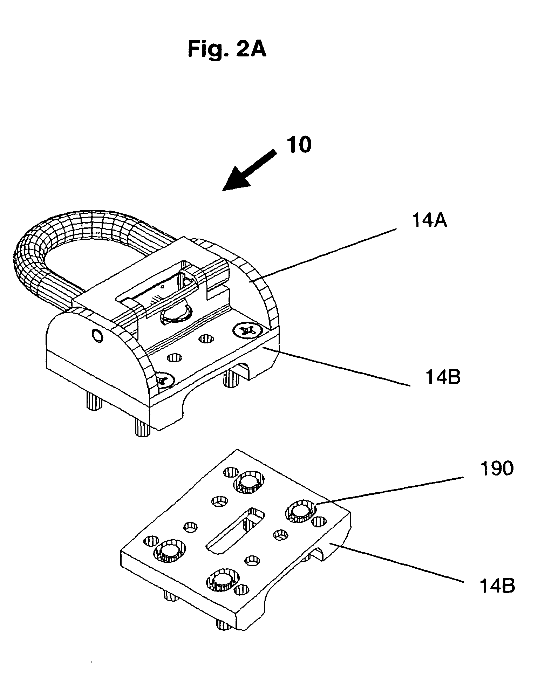

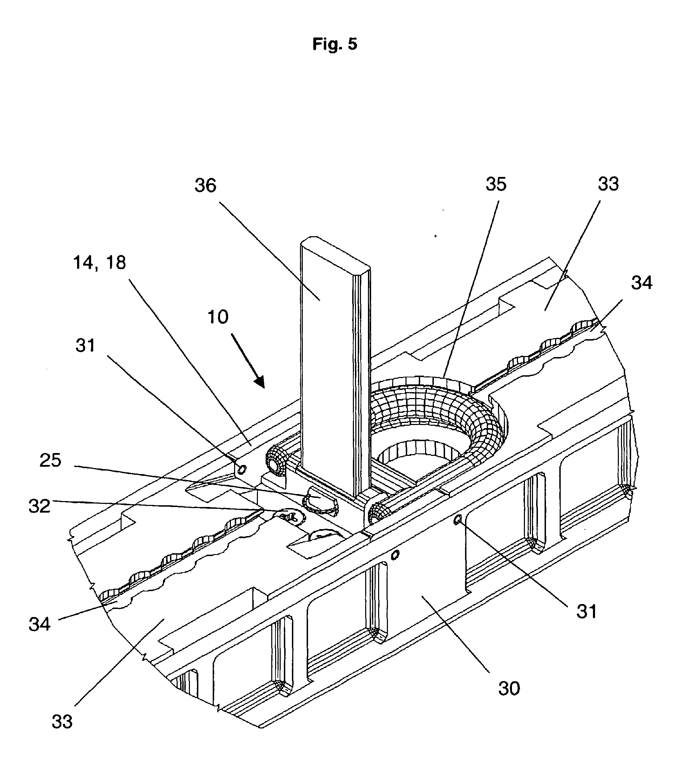

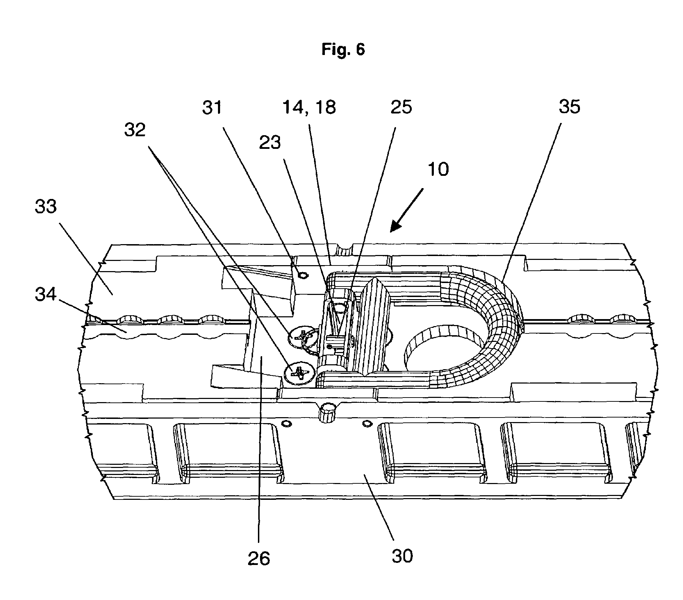

In Fig. 2 ist eine erfindungsgemäße Zurrvorrichtung 10 in einer Perspektivdarstellung gezeigt. Die Zurrvorrichtung 10 beinhaltet ein Zurrelement 11, das vorzugsweise eine um 90°gedrehte-D-Form aufweist. Mit der D-Form ist eine Verlängerung des Bogens in zwei Endabschnitte 12 und 13 erreicht, die zur Verbindung mit einem Grundkörper 14 ausgebildet sind. Die Endabschnitte 12 und 13 sind jeweils mit Querbohrungen 15 versehen durch die jeweils ein Verbindungsbolzen 16 gesteckt wird. Die Verbindungsbolzen 16 sind vorzugsweise am Grundkörper 14 gelagert. Das Zurrelement 11 ist somit um eine Schwenkachse 17 schwenkbar und kann bei Nichtgebrauch in eine horizontale Lage geschwenkt werden. Vorzugsweise befindet sich zwischen Grundkörper 14, Verbindungsbolzen 16 und Zurrelement 11 eine Rückholfeder 37, die bewirkt dass das Zurrelement bei Nichtgebrauch automatisch eine horizontale Lage einnimmt. Die Rückholfeder verhindert außerdem bei Vibrationen des Transportmittels ein Schwingen und Klappern des Zurrelements 11. Der Grundkörper 14 kann entsprechend des Einsatzfalles im Frachtladesystem als eine Halterung, die direkt an der Flugzeugstruktur 4 befestigt ist, als Befestigungselement für Fußbodenplatten auf oder in diese integriert direkt oder indirekt an der Flugzeugstruktur 4 befestigt werden oder als ein Einsatz innerhalb eines Befestigungskanals (siehe Fig. 5 und 6) ausgebildet sein. In der hier gezeigten Ausführungsform ist der Grundkörper 14 als ein Einsatz 18 ausgebildet. Der Einsatz 18 weist Befestigungsbohrungen 19 auf, durch die mittels Befestigungsmittel eine Anbindung an die Flugzeugstruktur 4, vorzugsweise als Befestigung an einem Spant, erfolgt. In der gezeigten Ausführung sind weiterhin seitliche Befestigungsbohrungen 20 angeordnet, um innerhalb eines Befestigungskanals oder einer Fußbodenplatte mit integrierten Schienen, Kanälen oder Einsenkungen (gezeigt in Fig. 5 und 6) fixiert werden zu können. An der Unterseite des Einsatzes 18 ist eine Freifräsung 21 insbesondere als Wasser- und Schmutzablauf für die Aufnahmeöffnung 23 vorgesehen. Eine leichte Reinigung und Drainage der Vorrichtung 10 und einer Befestigungsschiene 30 (siehe Fig. 5) ist möglich durch die konstruktive Gestaltung mit großen Wasserablauf- und Luftdurchflutungsöffnungen.

Eine vorteilhafte Ausführungsform des Grundkörpers 14 ist in Fig. 2A gezeigt. Eine Zweiteilung des Grundkörpers in einen oberen Block 14A sowie einen unteren Block 14B ist vorteilhaft, wenn für den Einbau im Zurrpunktkanal eine Justierung bzw. Ausgleichsmöglichkeit geschaffen werden soll. Durch die Zweiteilung ist eine Justage/ Ausgleichsmöglichkeit der Zurrvorrichtung 10 bzw. des unteren Supportblocks 14B relativ zur Struktur oder zum Zurrpunktkanal 18 bzw. des oberen Blocks 14A relativ zum unteren Supportblock 14B möglich, wobei:
- Langlöcher/ größere Bohrungen 190 im Supportblock 14B zur Befestigung an der Struktur
- Größere Löcher im Spant (Flugzeugtragstruktur)
- mögliche Befestigung mit Scheibe und Mutter
- Größere Bohrungen im oberen Block 14A vorgesehen sein können.

Durch diese Justage-/ Ausgleichsmöglichkeit mit Toleranzausgleichsmitteln ist eine genaue Einbaumöglichkeit der Zurrvorrichtungen 10 (bzw. von zentralen Aufnahmebohrungen 23 der Zurrvorrichtungen 10) zueinander bzw. relativ zur ungenauen Flugzeugtragstruktur in X-/ Y- Richtung möglich. Dieses ist wichtig für die in/ auf den Zurrvorrichtungen einzubauenden Systeme/ Equipment. Die Z- Toleranz kann optional durch dünne Bleche zwischen oberem und unterem Block 14A, 14B ausgeglichen werden.

Ein wesentlicher Bestandteil des Grundkörpers 14 ist eine zentrale Aufnahme 23, die vorzugsweise rund, quadratisch oder rechteckig ausgebildet sein kann. Die Aufnahmeöffnung 23 ist als Alternative vorgesehen, um Komponenten, die nicht mittels des Zurrelementes 11 im Frachtladesystem befestigt werden können, aufzunehmen und zu verriegeln. Durch die Befestigung der Zurrvorrichtung 10 vorzugsweise an der tragenden Struktur können die durch das Frachtgut hervorgerufenen Lasten bzw. Kräfte aufgenommen und in die tragende Struktur abgeführt werden. Je nach geometrischer Ausführung der Aufnahmeöffnung 23 können große statische Kräfte und Momente in allen Richtungen aufgenommen werden. In der gezeigten Ausführung ist die Aufnahmeöffnung 23 rechteckförmig ausgebildet. Durch die Querbohrung 24 in der Aufnahmeöffnung 23 kann eine innerhalb der Aufnahmeöffnung 23 zu fixierende Komponente mittels eines Verriegelungsbolzens 25 gesichert werden. So können über den Verriegelungsbolzen 25 zusätzlich Z-Kräfte und Momente aufgenommen werden. Eine weitere Befestigungsfläche 26 ist vorgesehen, um mit üblichen Befestigungsmöglichkeiten eine Aufnahme und Montage von zusätzlichen Adapterplatten zu ermöglichen. Dafür sind als Befestigungsmöglichkeiten beispielsweise Gewindebohrungen 27 an der Befestigungsfläche 26 angeordnet. Für die Nutzung der zentralen Aufnahmeöffnung 23 ist das Zurrelement 11 soweit zu schwenken bis die Aufnahmeöffnung frei zugänglich ist bzw. durch die Rückholfeder 37 zwischen Grundkörper 14, Verbindungsbolzen 16 und Zurrelement 11 wird bei Nichtgebrauch das Zurrelement 11 automatisch in eine horizontale Position gebracht.

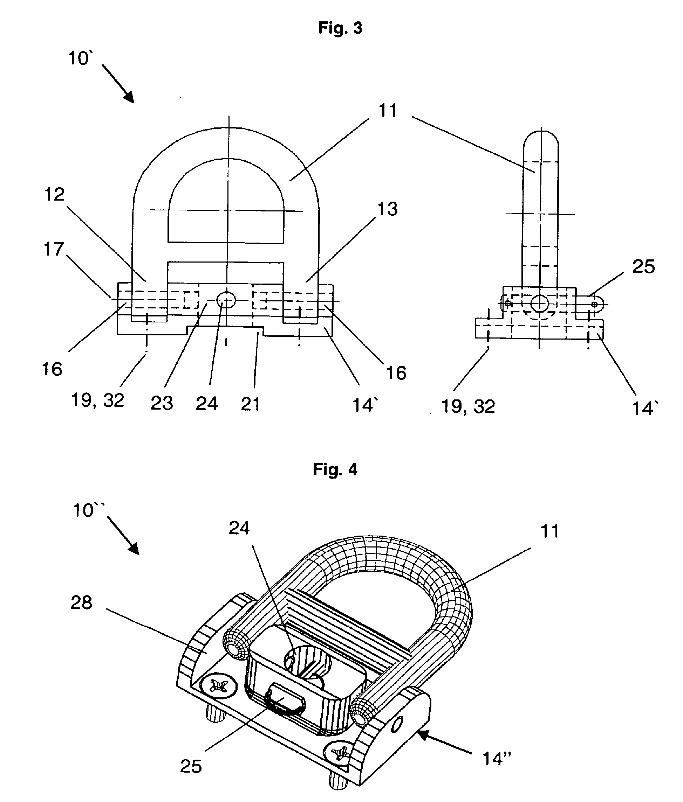

In Fig. 3 ist in einer Zwei-Seiten-Darstellung eine Zurrvorrichtung 10' in einer zweiten Ausführungsform ersichtlich. Diese Ausführungsform ist ohne seitliche Befestigungsmöglichkeiten und mit einer unterhalb des Grundkörpers 14' befindlichen (Drainage-) Ausfräsung vorgesehen. Der Grundkörper 14' dieser Zurrvorrichtung 10' ist hier als eine Halterung 28 ausgebildet, die unmittelbar an der tragenden Struktur angeordnet oder als Befestigungselement für Fußbodenplatten 9 auf oder in diese integriert direkt oder indirekt an der Flugzeugstruktur 4 befestigt werden kann. Das Zurrelement 11, die Verbindung mit dem Grundkörper 14' sowie das Vorsehen einer zentralen Aufnahmeöffnung 23 entsprechen der ersten Ausführungsform der Zurrvorrichtung 10. Die Halterung 28 ist zur Befestigung auf der Flugzeugstruktur oder zur Montage auf/in Fußbodenplatten vorgesehen; seitliche Befestigungsbohrungen 20 fehlen hier. An der Unterseite der Halterung 28 ist eine Freifräsung 21 vorgesehen die als Wasser- und Schmutzablauf vorgesehen ist. Eine leichte Reinigung der Vorrichtung 10' insbesondere der Aufnahmeöffnung 23 wird dadurch recht einfach realisiert.

In Fig. 4 ist eine perspektivische Darstellung einer Zurrvorrichtung 10" in einer dritten Ausführungsform ersichtlich. Ähnlich Fig. 3 ist der Grundkörper 14" dieser Zurrvorrichtung 10" hier als eine Halterung 28 ausgebildet, die unmittelbar an der tragenden Struktur angeordnet oder als Befestigungselement für Fußbodenplatten 9 auf oder in diese integriert indirekt an der Flugzeugstruktur 4 befestigt werden kann. Das Zurrelement 11, die Verbindung mit dem Grundkörper 14" sowie das Vorsehen einer zentralen Aufnahmeöffnung 23 entsprechen der ersten Ausführungsform der Zurrvorrichtung 10. Die Halterung 28 ist zur Befestigung auf der Flugzeugstruktur oder zur Montage auf/in Fußbodenplatten vorgesehen; seitliche Befestigungsbohrungen 20 und die an der Unterseite der Halterung 28 in Fig. 3 befindliche Freifräsung 21 fehlen hier.

In den Figuren 5 und 6 ist die Zurrvorrichtung 10 in zwei Darstellungen in einer Einbauvariante mit einem Befestigungskanal 30 gezeigt. In dem Befestigungskanal 30 ist die Zurrvorrichtung 10 als Einsatz 18 eingebracht. Eine Befestigung an z.B. der tragenden Struktur erfolgt an den bereits gezeigten Befestigungsbohrungen 19 durch Öffnungen in dem Befestigungskanal 30 oder aber der Einsatz 18 wird nur mit dem Kanal 30 fest verbunden, der wiederum mit der tragenden Struktur fest verbunden ist. Eine seitliche Befestigung 31 des Grundkörpers 14 an dem Befestigungskanal 30 ist ebenfalls vorgesehen, beziehungsweise der Kanal 30 weist Durchgangslöcher zu einer anderen Struktur auf.
Mittels Befestigungsschrauben 32 können Adapterplatten 33 durch Bohrungen im Grundkörper 14 hindurch an der Flugzeugstruktur oder direkt am Grundkörper 14 befestigt werden. Die Adapterplatten 33 weisen in der gezeigten Ausführung ein Befestigungsprofil 34 auf, hier dargestellt ist das üblicherweise in der Flugzeugindustrie bekannte Sitzschienenprofil (schwalbenschwanzförmiges Profil mit Bohrungen im Abstand von einem Zoll) zur Befestigung von Komponenten oder Sitzen in einer Flugzeugkabine.

Adapterplatten 33 können auch mit anderen üblichen Aufnahmen, die Befestigungsmittel aufweisen, ausgestattet sein oder nur als Abdeckplatten genutzt werden.

Darüber hinaus ist die Aufnahmeöffnung 23 als Schnittstelle zur Aufnahme von weiteren Installationen und Systemen, wie beispielsweise medizinische Versorgungseinrichtungen, Krankentragen, Sitze, Führungsschienen vorgesehen. Beispielhaft ist ein Schnittstellenelement 36 gezeigt, welches in der Aufnahmeöffnung 23 mittels des Verriegelungsbolzens 25 fixiert ist. Die Zurrvorrichtung 10 mit den Funktionen eines Zurrpunktes und einer Aufnahmeöffnung 23 und einer zusätzlichen Aufnahme-/ Befestigungsfläche 26, die kombiniert mit weiteren Komponenten wie beispielsweise ein Befestigungsprofil 34 zur Verwendung in einem Frachtdeck eines Flugzeuges eingesetzt werden kann, ermöglicht eine multifunktionelle und flexible Anpassung des Frachtdeckes an die durchzuführenden Transportaufgaben. Ersichtlich ist in beiden Darstellungen, dass für das Umklappen des Zurrringes 11 in die entsprechenden benachbarten Platten 33 bzw. Komponenten Aussparungen 35 vorgesehen sind, um ein Versenken des Elementes 11 ohne störende Übergänge zu erreichen.

### Bezeichnungsliste

- (1): Flugzeugdeck (Frachtdeck)
- (2): Fußboden
- (3): Zurrpunkte
- (4): Flugzeugstruktur
- (5): Zurrringe
- (6): Rolleneinheiten
- (7): Führungsschienen-/ Einheiten
- (8): Riegelelemente
- (9): Fußbodenplatte
- 10, 10', 10": Zurrvorrichtung
- 11: Zurrelement
- 12, 13: Endabschnitte
- 14, 14', 14": Grundkörper
- 14A, 14B: oberer und unterer Block des Grundkörpers
- 15: Querbohrungen
- 16: Verbindungsbolzen
- 17: Schwenkachse
- 18: Einsatz
- 19: Befestigungsbohrungen
- 190: Langlöcher / größere Bohrungen
- 20: seitliche Befestigungsmöglichkeiten z.B. Durchgangsbohrungen
- 21: Freifräsung
- 23: Aufnahmeöffnung
- 24: Querbohrung
- 25: Verriegelungsbolzen in Aufnahmeöffnung
- 26: Befestigungsfläche
- 27: Befestigungsmöglichkeit z.B. Gewindebohrungen
- 28: Halter
- 30: (Befestigungs-) Schiene/ Kanal / Fußbodenplatte
- 31: seitliche Befestigung
- 32: Befestigungselement
- 33: Adapterplatte
- 34: Befestigungsprofil (Sitzschienenprofilraster)
- 35: Aussparungen
- 36: Schnittstellenelement
- 37: Rückholfeder

## Patentansprüche

1. Zurrvorrichtung für ein Frachtladesystem eines Transportmittels, insbesondere eines Flugzeuges, welches ein Zurrelement (11) zum Verzurren von Lasten oder Gütern umfasst, das Zurrelement (11) mit zwei Endabschnitten (12, 13) an einem Grundkörper (14) gelagert und um eine Schwenkachse (17) schwenkbar ist, wobei der Grundkörper (14) weiterhin mindestens eine Aufnahme (23) zur Halterung eines Schnittstellenelementes (36)aufweist, **dadurch gekennzeichnet, dass** die Aufnahme am Grundkörper (14) als zentrale und durchgehende Aufnahmeöffnung (23) ausgebildet ist und eine Querbohrung (24) zur Aufnahme eines Verriegelungsbolzens (25) für das Schnittstellenelement aufweist und der Grundkörper (14) an seiner Unterseite eine Freifräsung (21) aufweist, die einen Wasser- und Schmutzablauf für die Aufnahmeöffnung (23) bildet.

2. Zurrvorrichtung nach Anspruch 1, **dadurch gekennzeichnet, dass** das Zurrelement (11) um die Schwenkachse (17) in eine annähernd horizontale Lage zu schwenken ist, um den Zugang zur Aufnahme (23) zuzulassen.

3. Zurrvorrichtung nach Anspruch 2, **dadurch gekennzeichnet, dass** das Zurrelement (11) um die Schwenkachse (17) mittels einer Rückholfeder (37) automatisch in eine annähernd horizontale Lage schwenkbar ist.

4. Zurrvorrichtung nach einem der Ansprüche 1 bis 3, **dadurch gekennzeichnet, dass** die geometrische Grundformder Aufnahmeöffnung (23) rund, rechteckig oder quadratisch ist.

5. Vorrichtung nach einem der Ansprüche 1 bis 4, **dadurch gekennzeichnet, dass** der Grundkörper (14) in einen oberen und einen unteren Block (14A, 14B) teilbar ist, wobei zumindest in einem Block (14A, 14B) Toleranzausgleichmittel (190), wie Langlöcher oder vergrößerte Bohrungen vorgesehen sind.

6. Zurrvorrichtung nach einem der Ansprüche 1 bis 5, **dadurch gekennzeichnet, dass** der Grundkörper (14) mit Befestigungsmöglichkeiten (19), vorzugsweise mit Durchgangsbohrungen zur Befestigung an einer tragenden Struktur (4) oder zur Befestigung von Fußbodenplatten auf einer tragenden Struktur versehen ist.

7. Zurrvorrichtung nach einem der Ansprüche 1 bis 6, **dadurch gekennzeichnet, dass** der Grundkörper (14) seitliche Befestigungsbohrungen (20) zur Befestigung innerhalb eines Befestigungskanals (30) oder ausgebildete Kanäle oder Einsenkungen in einer Fußbodenplatte aufweist.

8. Zurrvorrichtung nach einem der Ansprüche 1 bis 7, **dadurch gekennzeichnet, dass** der Grundkörper (14) eine zusätzliche Befestigungsfläche (26), vorzugsweise mit Befestigungsgewinde- oder Durchgangsbohrungen (27) aufweist.

## Claims

1. An anchoring device for a cargo loading system of a transportation means, in particular an aircraft, comprising an anchoring element (11) for anchoring loads or goods, the anchoring element (11) having two end portions (12,13) being supported on a base body (14) and being pivotable around an axis (17) of rotation, wherein the base body (14) further comprises at least one receptacle (23) for holding an interface element (36), **characterized in that** the receptacle on the base body (14) is formed as a central and penetrating receptacle (23) comprising a cross-hole (24) for receiving a lock bolt for the interface element, and the base body (14) comprises a milled opening (21) on a bottom side thereof forming a drain of the receptacle (23) for water and dirt.

2. An anchoring device according to claim 1, **characterized in that** the anchoring element (11) is pivotable around the axis (17) of rotation into a substantially horizontal position for allowing access to the receptacle (23).

3. An anchoring device according to claim 2, **characterized in that** the anchoring element (11) is automatically pivotable around the axis (17) of rotation into a substantially horizontal position by means of a return spring (37).

4. An anchoring device according to any one of claims 1 to 3, **characterized in that** the geometric basic shape of the receptacle (23) is round, rectangular or square.

5. A device according to any one of claims 1 to 4, **characterized in that** the base body (14) is dividable into upper and lower blocks (14A, 14B), wherein tolerance compensating means (190), such as elongated holes or extended bores, are provide in at least in one of the blocks (14A, 14B),.

6. A device according to any one of claims 1 to 5, **characterized in that** the base body (14) comprises attaching means (19) preferably having penetrating holes for attachment to a supporting structure (4) or for attachment of floor plates to a supporting structure.

7. An anchoring device according to any one of claims 1 to 6, **characterized in that** the base body (14) comprises side attachment bores (20) for attachment within an attachment channel (30) or comprises channels or recesses formed in a floor plate.

8. A device according to any one of claims 1 to 7, **characterized in that** the base body (14) comprises an additional attaching surface (26) preferably having attachment threads or penetrating bores (27).

## Revendications

1. Dispositif d'arrimage pour un système de chargement de fret d'un moyen de transport en particulier d'un avion, qui comprend un élément d'arrimage (11) pour arrimer des charges ou des marchandises, l'élément d'arrimage (11) étant supporté par deux sections d'extrémité (12, 13) sur un socle (14) et étant capable de pivoter autour d'un axe de pivotement (17), le socle (14) comportant en outre un logement (23) pour fixer un élément d'interface (36), **caractérisé en ce que** le logement est réalisé sur le socle (14) sous forme d'ouverture de logement (23) centrale et traversante et comporte un perçage transversal (24) pour recevoir un boulon de verrouillage pour l'élément d'interface, et le socle (14) présentant sur son côté inférieur un fraisage de dégagement (21) qui constitue une évacuation d'eau et de saleté, pour l'ouverture de logement (23).

2. Dispositif d'arrimage selon la revendication 1, **caractérisé en ce que** l'élément d'arrimage (11) doit être pivoté autour de l'axe de pivotement (17) dans une position approximativement horizontale, afin de permettre l'accès au logement (23).

3. Dispositif d'arrimage selon la revendication 2, **caractérisé en ce que** l'élément d'arrimage (11) peut pivoter, au moyen d'un ressort de rappel (37), automatiquement autour de l'axe de pivotement, (17), dans une position approximativement horizontale.

4. Dispositif d'arrimage selon l'une quelconque des revendications 1 à 3, **caractérisé en ce que** la forme géométrique de base de l'ouverture de logement (23) est ronde, rectangulaire ou carrée.

5. Dispositif d'arrimage selon l'une quelconque des revendications 1 à 4, **caractérisé en ce que** le socle (14) peut être divisé en un bloc supérieur et un bloc inférieur (14A, 14B), des moyens de compensation de tolérance (190), comme des trous oblongs ou des perçages agrandis, étant prévus dans au moins l'un des blocs (14A, 14B).

6. Dispositif d'arrimage selon l'une quelconque des revendications 1, à 5, **caractérisé en ce que** le socle (14) est pourvu de moyens de fixation (19), de préférence de perçages traversants pour la fixation à une structure portante (4) ou de moyens de fixation de plaques de base sur une structure portante.

7. Dispositif d'arrimage selon l'une quelconque l'une des revendications 1 à 6, **caractérisé en ce que** le socle (14) comporte des perçages de fixation latéraux (20) pour la fixation à l'intérieur d'un canal de fixation (30) ou de canaux réalisés ou de cavités dans une plaque de base.

8. Dispositif d'arrimage selon l'une quelconque, des revendications, 1 à 7, **caractérisé en ce que** le socle (14) comporte une surface de fixation supplémentaire (26), de préférence dotée de perçages taraudés de fixation ou de perçages traversants (27).
